# EUROPEAN PATENT SPECIFICATION

(11) **EP 0 467 887 B1**
(45) Date of publication and mention of the grant of the patent: **02.11.1994**
(21) Application number: 90903306.0
(22) Date of filing: 13.02.1990
(51) Int. Cl.: B01D 21/01

(54) **CLARIFICATION PROCESS**
KLÄRANLAGE
PROCEDE DE CLARIFICATION

(30) Priority: 16.02.1989 AU 2770/89
(43) Date of publication of application: 29.01.1992
(73) Proprietor: HOEFER, Dawn Annette, Gidgegannup, W.A. 6555 (AU)
(72) Inventor: BROWNE, Geoffrey Robert, Perth, W.A. 6000 (AU)
(74) Representative: Jennings, Nigel Robin
(86) International application number: AU9000059
(87) International publication number: WO9009222

(56) References cited:
- AU-A- 2 267 388
- AU-B- 6 960 474
- CH-A- 546 208
- DE-A- 2 017 041
- US-A- 3 276 998
- US-A- 3 350 302

## Description

The invention relates to a process for clarifying liquors containing suspended solids.

Such liquors are produced throughout industry generally, and in some instances present substantial difficulties with respect to handling and disposal. In this regard, the liquors comprise both aqueous and non-aqueous liquids having concentrations of suspended solids up to 40 gm/l or more.

The following brief discussion concerns the clarification problems encountered with three specific liquors produced in the mining industry and is intended to illustrate the extent to which difficulties clarifying liquors are wide spread throughout the mining industry.

The first example relates to the gold mining industry. In this regard, the removal of gold from ore by leaching with cyanide produces tailings suspended in liquor. Under certain circumstances, in order to properly dispose of the liquor it is necessary to separate the tailings from the liquor and then to treat the liquor to remove any cyanide in solution. In the course of this treatment the formation of copper cyanide and other metal cyanide precipitates is common. Typically, the concentration of the precipitates is in the order of 0.5 gm/l. In many instances, conventional settling techniques, such as the use of flocculents, are not satisfactory, and a proportion of the precipitates remain suspended in the liquor and adversely affect the efficiency of the subsequent treatment of the liquor to remove dissolved cyanide. Furthermore, usually, the treated substantially cyanide-free liquor is transferred to a settling pond or tank and left to stand to allow the remaining portion of the precipitates to settle from the liquor before the liquor is released to the environment. However, in many instances, the precipitates are slow settling, even in situations where flocculents are added, and as a consequence mining companies are forced to maintain relatively large settling ponds or tanks in order to contain the volume of liquor.

The second example relates to the Bayer Process for the extraction and refining of alumina via a digestion process utilising caustic soda solution. This process dissolves alumina from bauxite ore and following liquor clarification the alumina is recrystallised as alumina trihydrate.

During the digestion process certain organic materials present in the ore are also dissolved, and subsequently all or part of these organics are converted to sodium oxalate. Unless the concentration of sodium oxalate converted in the process liquor stream is controlled below a certain critical level, the oxalate tends to co-precipitate with the alumina causing substantial deterioration in product quality.

In order to reduce the concentration of sodium oxalate, in certain forms of the Bayer process sodium oxalate is itself removed from the liquor stream by crystallisation in a side stream followed by subsequent liquid-solid separation steps. The sodium oxalate is disposed of while the purified liquor side-stream is returned to the main process flow, thus diluting the overall concentration of sodium oxalate in the main process stream. Typically, the concentration of solid sodium oxalate in the side stream is in the order of 18 to 22 gm/l.

An essential feature of the side stream process for the removal of sodium oxalate is the liquid-solid separation step in which sodium oxalate crystals are removed from suspension. Whilst the preferred method of clarification is to use a settling tank or thickener, often the overflow clarities achieved in these devices are unsatisfactory resulting in the need for subsequent down stream filtration stages. Good clarities of the returning side stream are essential to prevent solid sodium oxalate re-dissolving in the main process stream.

Conventional settling techniques are largely inadequate. For example, whilst flocculents, such as polyelectrolytes, can form sodium oxalate flocs, these tend to form semi-stable networks which are very slow settling and, in the presence of entrained air will even float to the thickening tank overflow. Moreover, the slow settling characteristic of such flocs is due also to the viscous nature of the suspension.

The third example relates to the recovery of mineral sands from swamps by dredging the bottom of the swamps and separating the mineral sands from the other solids and liquors removed by the dredge. The unwanted solids and liquor form a black slime, and typically the concentration of solids in the slime is in the order of 36 gm/l. Conventional settling techniques are totally inadequate, and usually the slime is transferred to large settling ponds and left.

An object of the present invention is to provide a clarification process which alleviates the problems described in the preceding paragraphs.

The invention, in its broadest aspect, comprises a process for clarifying a liquor containing suspended solids, the process comprising adding inert particulate carrier and flocculent to the liquor, with the amount of inert particulate carrier added selected so that the weight ratio of inert particulate carrier to suspended solids is above a minimum value necessary to cause substantial clarification of the liquor, the minimum value being a function of the concentration of suspended solids such that the minimum value decreases as the concentration of suspended solids increases.

The term "liquor" is understood herein to include aqueous and non-aqueous liquids.

The term "inert" used herein in relation to "particulate carrier" is understood to mean that the particulate carrier is not substantially attacked by the liquor. In other words, the term "inert" means that the particulate carrier exhibits both suitable chemical and physical stability in the liquor.

The term "substantial clarification" is understood herein to mean the removal of suspended solids to the extent that the final concentration of suspended solids is much less than the levels typically specified in discharge limits imposed on effluent streams released to the environment, i.e. of the order of 20 ppm or less.

The present invention, as described broadly above, is based on the realisation that the ratio of inert particulate carrier to suspended solids has a significant influence on the clarification of liquors. This realisation is based on several observations.

First, it has been found that for a given concentration of suspended solids in a liquor the addition of inert particulate carrier in an amount above a critical weight ratio of inert particulate carrier to suspended solids causes substantial and, in some instances, almost instantaneous clarification of a liquor.

Second, it has been found that to a large extent the value of the critical ratio is a function of the concentration of suspended solids, such that at different concentrations of suspended solids there will be different values of the critical ratio.

In other words, as a consequence of the above observations, it has been realised that the amount of inert particulate carrier required to cause substantial clarification of a liquor is not merely a function of the amount of inert particulate carrier added but rather is a function of the amount of inert particulate carrier added relative to the amount of suspended solids in the liquor.

Specifically, at relatively low concentrations of suspended solids, the critical ratio is relatively high, for example, in excess of 10:1, whereas as the concentration of suspended solids increases the critical ratio decreases such that at relatively high concentrations the critical ratio, for example, is as low as 4:1.

The term "relatively low" used herein in relation to suspended solids is understood to mean concentrations of suspended solids less than 0.5 gm/l.

The term "relatively large" used herein in relation to suspended solids is understood to mean concentrations of suspended solids in the range of 30 to 40 gm/l.

The upper limit of the inert particulate carrier addition may vary depending on a number of factors.

One factor is that there is a practical limit to the amount of inert particulate carrier that can be added to a given volume of liquor. At relatively low concentrations of suspended solids this will not generally be a significant factor. However, as the concentration of suspended solids increases the practical limit may well be approached or passed in which case one option, in accordance with the invention, is to dilute the liquor.

Another factor is the economics of the process and specifically the fact that there are costs associated with handling the inert particulate carrier. As a consequence, there is an inherent motivation from the economic view point to minimise the inert particulate carrier addition.

A further factor is that at very high inert particulate carrier additions there is observed a deterioration of clarification which suggests that the system is being overloaded.

It is preferred that the inert particulate carrier is sand. Typically, the size of the sand is between 75 and 300 micron.

The inert particulate carrier may also be selected from alumina, magnetite, hematite, ilmenite and calcite. It is noted that any other suitable inert particulate carrier may be used.

It is preferred that the flocculent is a polyelectrolyte.

It is thought that the mechanism by which the inert particulate carrier and the flocculent are able to substantially clarify a liquor is essentially chemical, with the polymer chains of the polyelectrolyte being chemically anchored to the inert particulate carrier and to the suspended solids thereby to bridge and hold together the inert particulate carrier and the suspended solids.

The present invention, in a more particular aspect, comprises a pre-clarification step of aggregating or agglomerating suspended particles which are relatively small in size, such as by the use of primary coagulants.

The term "relatively small" used herein in relation to the size of the suspended solids is understood to mean that the size of the suspended solids is such that there is only a small probability of collisions between the inert particulate carrier and the suspended solids.

The above more particular aspect of the invention is based on the realisation that the size of the suspended solids relative to the size of the inert particulate carrier has an influence on the clarification of liquors. The realisation is based on several observations.

First, it has been found that if the suspended solids in a liquor are relatively small in size there will be no substantial clarification of the liquor at any practical ratio of inert particulate carrier to suspended solids. This observation is largely independent of the concentration of suspended solids in the liquor.

Second, it has been found that aggregating or agglomerating such relatively small suspended solids enables the addition of the inert particulate carrier and flocculent, in accordance with the broad aspect of the invention described above, to cause substantial clarification of the liquor.

It is preferred that the process of the invention further comprises agitating the liquor after the addition of flocculent and inert particulate carrier to encourage the formation of a sediment comprising flocculent, inert particulate carrier and suspended solids.

With such an arrangement it is also preferred that the process further comprises transferring the liquor and the flocs to a settling tank to allow the flocs to separate from the liquor.

It is preferred particularly that the process further comprises, separating the liquor and the sediment comprising flocculent, inert particulate carrier and suspended solids and agitating the precipitate to break up the flocs. The inert particulate carrier and the suspended solids may then be separated by conventional techniques. With such an arrangement it is possible to recover and to re-use the inert particulate carrier.

The inert particulate carrier may be added to the liquor before, after or simultaneously with the flocculent.

The size distribution of the inert particulate carrier needs to be such that it is not so coarse that it does not take in the flocculation process, nor not so small that it is lost in subsequent classification to separate the inert particulate material from the suspended solids.

There are no particular requirements concerning the shape of the inert particulate carrier.

Further description of the invention is now provided with reference to the accompanying drawings, in which:

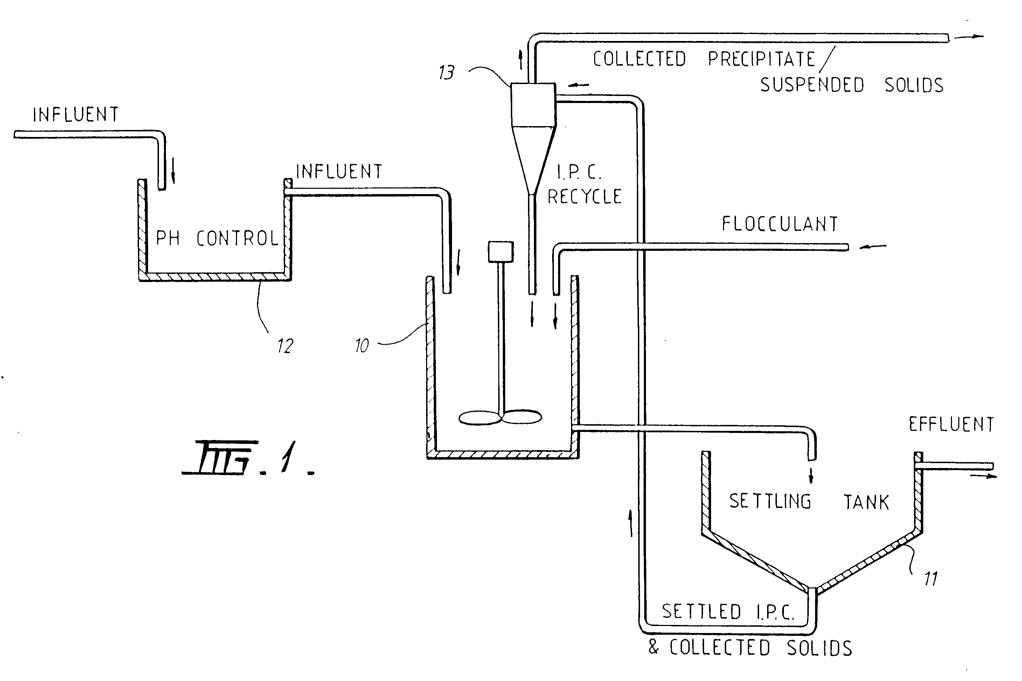

Figure 1 is a flow chart of a preferred embodiment of the process of the invention; and
Figures 2 to 4 are graphs of the relationship between clarity and the ratio of inert particulate carrier and suspended solids for liquors containing suspensions of ferric hydroxide, raw sewerage and clay, respectively.

The process shown in the figure is adapted to clarify an influent stream containing suspended solids.

The influent stream may comprise liquor containing metal cyanide precipitate produced in a process for recovering or regenerating cyanide from gold leach tailings liquor or liquor containing sodium oxalate produced in the Bayer Process or any other liquor containing suspended solids. The influent stream may also comprise any other liquor containing suspended solids.

With reference to the figure, the influent stream is transferred to a conditioning tank 10, optionally via a pH control tank 12, and is dosed with appropriate concentrations of inert particulate material and flocculent. The flocculent may be any suitable known flocculent, such as a polyelectrolyte.

The influent stream is then agitated in the conditioning tank 10 to cause the formation of flocs which entrain inert particulate material and suspended solids.

The influent stream is then transferred to a settling tank 11 in which the flocs settle rapidly.

The clarified effluent from the settling tank 11 may be transferred to a second circuit of the conditioning tank 10 and settling tank 11 for further clarification. Alternatively, the clarified effluent may be transferred to a final filtration stage. In the case of liquor containing metal cyanide precipitates produced in a process for recovering or regenerating cyanide from gold leach tailings liquor, the filtered clarified effluent may be subsequently transferred for treatment to remove any cyanide in solution in the effluent. In the case of liquor containing sodium oxalate the filtered clarified effluent may be subsequently returned to the main Bayer Process stream.

The settled flocs in the settling tank 11 are transferred to a hydrocyclone 13 or other suitable attritioning device to separate the inert particulate material and the suspended solids. The underflow from the hydrocyclone 13, which comprises inert particulate material and a small quantity of entrained suspended solids, is recycled to the conditioning tank 10. The overflow from the hydrocyclone 13, which comprises the remainder of the suspended solids and retained liquor, is transferred to a settling pond (not shown) or other suitable clarifying device for recovery of suspended solids or liquor, if required. Alternatively, the overflow from the hydrocyclone 13 is transferred directly for disposal.

The effectiveness of the clarification process of the invention is illustrated hereinunder by reference to the following examples.

### Example 1

A series of experiments was carried out on liquors containing a suspension of ferric hydroxide to investigate the effect of the weight ratio of inert particulate material (silica sand) to suspended solids on clarification of the liquors.

The experiments were carried out on liquors having a concentration of 1.0 gm/l and on liquors having a concentration of 0.1 gm/l to investigate the relationship between the ratio of silica sand to suspended solids to cause substantial clarification and the concentration of suspended solids.

The flocculent used in the experiments was a commercially available polyelectrolyte "Magnafloc 333" (Trademark, Allied Colloids (Aust) Pty. Limited).

Samples of the liquors were placed in 500 ml cylinders and agitated by inverting the cylinders. The clarity of the liquors was measured by a Nephelometer 30 seconds after the last inversion of the cylinders.

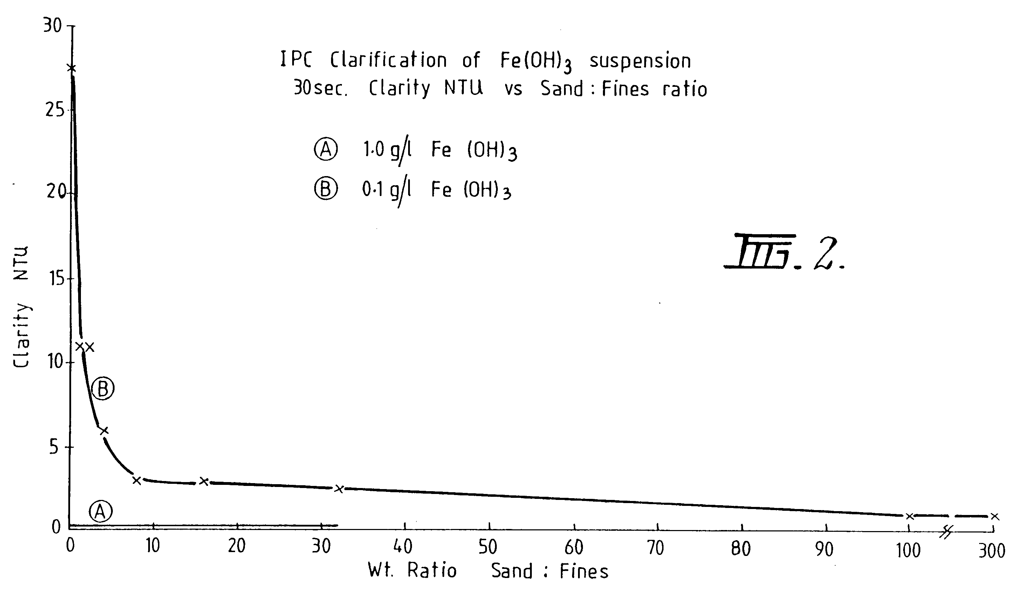

The results of the experiments are illustrated in Figure 2.

The figure shows that at a concentration of 1.0 gm/l the ferric hydroxide was substantially self-settling and the addition of sand was not required to cause substantial clarification of the liquor.

However, the figure also shows that at a concentration of 0.1 gm/l the addition of sand had a significant effect on clarification of the liquor. In particular, it is evident that at ratios of sand to suspended solids in excess of 8:1 it was possible to substantially clarify the liquor.

### Example 2

A similar set of experiments to those described in Example 1 was carried out on liquors containing a suspension of 0.2 gm/l raw sewerage.

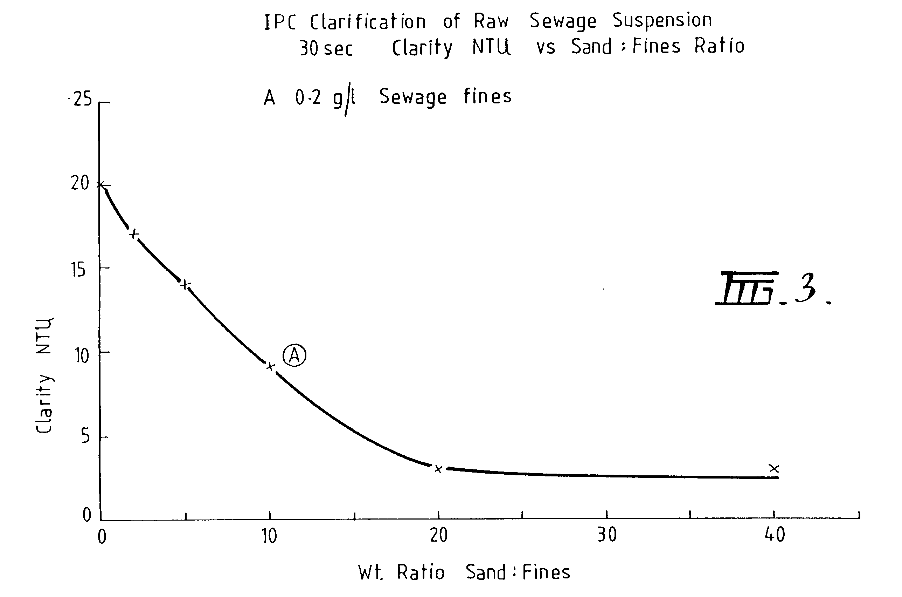

The results of the experiments are shown in Figure 3.

The figure shows that as the ratio of silica sand to suspended solids increased there was an increase in the clarity and that at ratios of silica sand to suspended solids in excess of 20:1 there was substantial clarification of the liquor.

### Example 3

A similar set of experiments to that described in Example 1 was carried out on liquors containing a suspension of clay fines in concentrations of 34.5 gm/l, 3.5 gm/l and 0.35 gm/l.

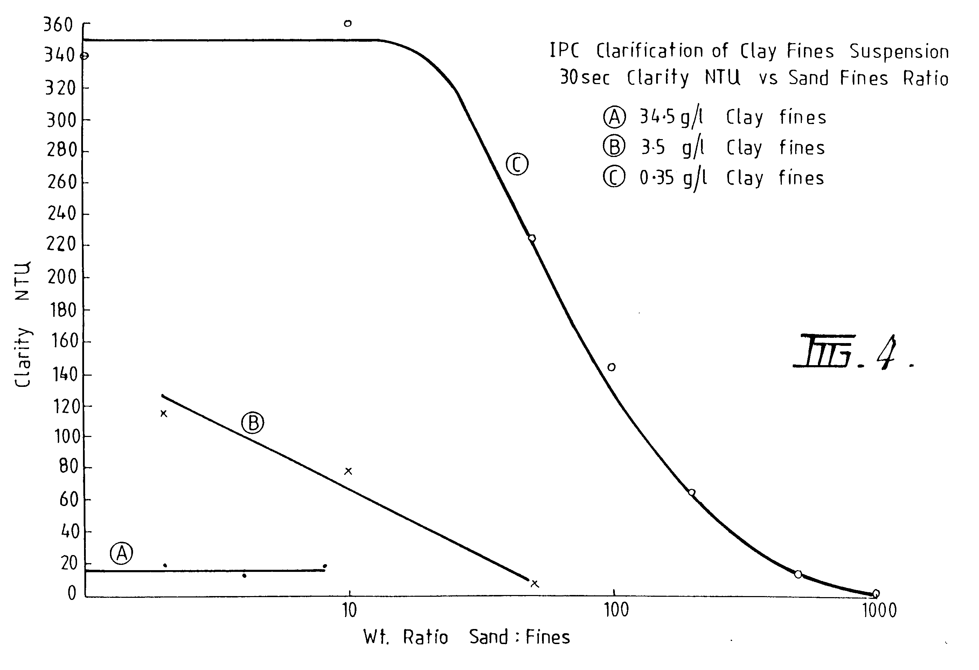

The results of the experiments are shown in Figure 4.

The figure shows that the addition of sand had no effect on the clarity of liquors containing the relatively high concentration of 34.5 gm/l suspended solids.

In relation to the intermediate concentration of 3.5 gm/l of suspended solids the figure shows that an increase in the ratio of silica sand to suspended solids caused a steady increase in clarity to a level approximate half that achieved with the relatively high concentration of suspended solids.

More significantly, the figure shows that at the low concentration of 0.35 gm/l of suspended solids there was a marked increase in clarity at ratios of silica sand to suspended solids in excess of 20:1.

### Example 4

A series of experiments was carried out on effluent from the Swan Brewery in Western Australia which contained a suspension of 0.16 gm/l fines.

The experiments comprised the addition of silica sand and a commercially available flocculent, "zetag 76" (Trademark, Allied Colloids (Aust) Pty. Limited), to samples of the effluent which were subsequently agitated and left to stand. The ratio of silica sand to suspended solids was approximately 940:1 and the concentration of the flocculent was varied from 0.5 to 20 ppm.

The clarity of the effluent was evaluated qualitatively.

It was observed that the addition of the silica sand and flocculent caused no discernible clarification of the suspended solids, and it is postulated that this is due to the relatively small size of the fines comprising the suspended solids.

### Example 5

A series of experiments was carried out on effluent from the Swan Brewery in Western Australia which contained a suspension of 0.11 gm/l fines with an as-received clarity of 20 NTU.

The experiments comprised the addition of silica sand, " zetag 76" and alum to act as a coagulant to samples of the effluent which were subsequently agitated and left to stand. The ratio of silica sand to suspended solids was approximately 180:1, the concentration of "zetag 76" was 15 ppm, and the concentration of alum was 20 ppm.

It was found that there was substantial clarification of the effluent, with readings of 1.1 NTU and 0.013 gm/l residual suspended solids being recorded.

The results noted above confirm that aggregation or agglomerating of fine particles of suspended solids enables the silica sand and flocculent to substantially clarify liquor.

### Example 6

A series of experiments was carried out on clarifier feed from the Swan Brewery in Western Australia which contained a suspension of 4.5 gm/l solids.

The experiments comprised the addition of silica sand and "zetag 76" to samples of clarifier feed which were subsequently agitated and left to stand. The ratio of silica sand to suspended solids was 33:1 and the concentration of "zetag 76" was varied between 0.5 and 20 ppm.

The clarity of the effluent was evaluated qualitatively.

It was observed that there was clarification of the liquor at all concentrations of "zetag 76", although there was a marked improvement in clarity at concentrations of "zetag 76" in excess of 10 ppm.

The results show that the amount of flocculent has an influence on clarification.

### Example 7

The series of experiments outlined in Example 6 were repeated, with the addition of alum.

It was observed that there was little difference in the clarification as compared with the results obtained in example 6.

### Example 8

A series of experiments was carried out on clarifier feed from the Swan Brewery in Western Australia which contained a suspension of 4.5 gm/l.

The experiments comprised the addition of silica sand, "zetag 76" and alum to samples of clarifier feed which were subsequently agitated and left to stand.

The experiments were carried out with ratios of silica sand to suspended solids of 1:1, 5:1, 10:1, 20:1, 40:1 and 50:1. The concentration of "zetag 76" was 20 ppm and the concentration of alum was 10 ppm.

The experiments included a control with no silica sand addition.

The clarity of the clarifier feed was evaluated qualitatively.

It was observed that there was good clarity over the whole range of ratios of silica sand to suspended solids evaluated, whereas there was relatively poor clarification in the control, with flocs of suspended solids floating throughout the liquor.

It was also observed that there was significantly better compaction of the suspended solids and sand at ratios of silica sand to suspended solids of 10:1, 20:1 and 40:1 than was found at the lower ratios of sand to suspended solids.

### Example 9

A series of experiments was carried out on a mixture of effluent and clarifier feed from the Swan Brewery in Western Australia which contained a suspension of 1.0 gm/l fines.

The experiments comprised the addition of silica sand, "zetag 76" and alum to samples of the combined effluent and clarifier feed which were subsequently agitated and left to stand.

The experiments were carried out with ratios of silica sand to suspended solids of 1:1, 5:1, 10:1, 20:1, 40:1 and 50:1. The concentration of "zetag 76" was 20 ppm and the concentration of alum was 10 ppm.

The experiments included a control with no silica sand.

The clarity of the combined effluent and clarifier feed was evaluated qualitatively.

It was observed that there was almost instantaneous settling of the suspended solids in the samples with ratios of silica sand to suspended solids of 20:1, 40:1, and 50:1, with good clarification in each case.

It was also observed that there was relatively quick settling with the samples having ratios of silica sand to suspended solids of 1:1, 5:1 and 10:1, although with only reasonable clarification.

Further, it was observed that the clarification of the control was relatively poor, with flocs of suspended solids floating throughout the liquor.

## Claims

1. A process for clarifying a liquor containing suspended solids, the process comprising adding inert particulate carrier and flocculent to the liquor and separating the inert particulate carrier and the suspended solids to allow the re-use of the inert particulate carrier in the process, characterised in that the amount of inert particulate carrier added is selected so that the weight ratio of inert particulate carrier to suspended solids is above a minimum value necessary to cause substantial clarification of the liquor, the minimum value being a function of the concentration of suspended solids such that the minimum value decreases as the concentration of suspended solids increases.

2. The process defined in Claim 1, wherein at concentrations of suspended solids of less than 0.5 gm/l the minimum value of the weight ratio is in excess of 10:1.

3. The process defined in Claim 2, wherein the minimum value of the weight ratio is in excess of 20:1.

4. The process defined in Claim 1, wherein at concentrations of suspended solids in the range of 30 to 40 gm/l the minimum value of the ratio is as low as 4:1.

5. The process defined in any one of the preceding claims, wherein the inert particulate carrier is silica sand.

6. The process defined in Claim 5, wherein the size of the silica sand is between 75 and 300 microns.

7. The process defined in any one of Claims 1 to 4, wherein the inert particulate carrier is selected from the group comprising alumina, magnetite, hematite, ilmenite and calcite.

8. The process defined in any one of the preceding claims, wherein the flocculent is a polyelectrolyte.

9. The process defined in any one of the preceding claims, which further comprises a pre-clarification step of aggregating or agglomerating suspended solids.

10. The process defined in any one of the preceding claims, which further comprises agitating the liquor after the addition of flocculent and inert particulate carrier to encourage the formation of a sediment comprising flocculent, inert particulate carrier and suspended solids.

11. The process defined in Claim 10, which further comprises transferring the liquor and the flocs to a settling tank to allow the flocs to separate from the liquor.

12. The process defined in Claim 11, further comprising separating the liquor and the sediment comprising flocculent, inert particulate carrier and suspended solids and agitating the precipitate to break up the flocs and thereby separate the inert particulate carrier and the suspended solids.

13. The process defined in any one of the preceding claims, wherein the inert particulate carrier is added to the liquor before or simultaneously with the flocculent.

## Patentansprüche

1. Verfahren zum Klären einer Flüssigkeit, die schwebende Feststoffe enthält, bei dem ein inerter Partikelträger und ein Flockungsmittel der Flüssigkeit hinzugefügt werden und der inerte Partikelträger und die schwebenden Feststoffe getrennt werden, um eine Wiederverwendung des inerten Partikelträgers in dem Verfahren zu ermöglichen,
**dadurch gekennzeichnet,**
daß die Menge des hinzugefügten inerten Partikelträgers so gewählt wird, daß das Gewichtsverhältnis des inerten Partikelträgers zu den schwebenden Feststoffen über einem minimalen Wert liegt, der notwendig ist, um eine wesentliche Klärung der Flüssigkeit zu bewirken, wobei der minimale Wert eine Funktion der Konzentration der schwebenden Feststoffe derart ist, daß der minimale Wert abnimmt, wenn die Konzentration der schwebenden Feststoffe ansteigt.

2. Verfahren nach Anspruch 1, bei dem bei Konzentrationen der schwebenden Feststoffe von weniger als 0,5 gm/l der minimale Wert des Gewichtsverhältnisses über 10:1 liegt.

3. Verfahren nach Anspruch 2, bei dem der minimale Wort des Gewichtsverhältnisses über 20:1 liegt.

4. Verfahren nach Anspruch 1, bei dem bei Konzentrationen der schwebenden Flüssigkeiten im Bereich von 30 bis 40 gm/l der minimale Wert des Verhältnisses so niedrig wie 4:1 ist.

5. Verfahren nach einem der vorhergehenden Ansprüchen, wobei der inerte Partikelträger Kieselsand ist.

6. Verfahren nach Anspruch 3, wobei die Größe des Kieselsandes zwischen 75 und 300 µm liegt.

7. Verfahren nach einem der Ansprüche 1 bis 4, bei dem der inerte Partikelträger aus der Gruppe ausgewählt ist, die Tonerde, Magnetit, Hematit, Ilmenit und Kalzit enthält.

8. Verfahren nach einem der vorhergehenden Ansprüche, bei dem das Flockungsmittel ein Polyelektrolyt ist.

9. Verfahren nach einem der vorhergehenden Ansprüche, das darüber hinaus einen Vorklärschritt des Sammelns oder Häufens der schwebenden Feststoffe umfaßt.

10. Verfahren nach einem der vorhergehenden Ansprüche, bei dem weiterhin die Flüssigkeit nach dem Hinzufügen des Flockungsmittels und inerten Partikelträgers bewegt wird, um die Bildung eines Sedimentes aus Flockungsmittel, inertem Partikelträger und schwebenden Feststoffen zu unterstützen.

11. Verfahren nach Anspruch 10, bei dem weiterhin die Flüssigkeit in einen Absetztank überführt wird, um die Trennung der Flocken von der Flüssigkeit zu ermöglichen.

12. Verfahren nach Anspruch 11, bei dem weiterhin die Flüssigkeit und das das Flockungsmittel, inerten Partikelträger und schwebende Feststoffe enthaltende Sediment getrennt wird und der Niederschlag bewegt wird, um die Flocken aufzubrechen und dabei den inerten Partikelträger und die schwebenden Feststoffe zu trennen.

13. Verfahren nach einem der vorhergehenden Ansprüche, bei dem der inerte Partikelträger der Flüssigkeit vor oder gleichzeitig mit dem Flockungsmittel hinzugefügt wird.

## Revendications

1. Procédé pour la clarification d'une liqueur contenant des solides en suspension, le procédé comprenant l'addition de support particulaire inerte et de floculant à la liqueur et la séparation du support particulaire inerte et des solides en suspension pour permettre la réutilisation du support particulaire inerte dans le procédé, caractérisé en ce que la quantité de support particulaire inerte ajoutée est choisie de telle sorte que le rapport pondéral du support particulaire inerte aux solides en suspension est supérieur à la valeur minimale nécessaire pour provoquer une clarification notable de la liqueur, la valeur minimale étant une fonction de la concentration des solides en suspension telle que la valeur minimale diminue à mesure qu'augmente la concentration des solides en suspension.

2. Procédé suivant la revendication 1, dans lequel la valeur minimale du rapport pondéral dépasse 10:1 à des concentrations de solides en suspension inférieures à 0,5 g/l.

3. Procédé suivant la revendication 2, dans lequel la valeur minimale du rapport pondéral dépasse 20:1.

4. Procédé suivant la revendication 1, dans lequel la valeur minimale du rapport pondéral n'est que de 4:1 à des concentrations de solides en suspension dans la gamme de 30 à 40 g/l.

5. Procédé suivant l'une quelconque des revendications précédentes, dans lequel le support particulaire inerte est un sable de silice.

6. Procédé suivant la revendication 3, dans lequel la dimension du sable de silice est comprise entre 75 et 300 µm.

7. Procédé suivant l'une quelconque des revendications 1 à 4, dans lequel le support particulaire inerte est choisi dans le groupe consistant en alumine, magnétite, hématite, ilménite et calcite.

8. Procédé suivant l'une quelconque des revendications précédentes, dans lequel le floculant est un polyélectrolyte.

9. Procédé suivant l'une quelconque des revendications précédentes, qui comprend de plus une étape de pré-clarification d'agrégation ou d'agglomération des solides en suspension.

10. Procédé suivant l'une quelconque des revendications précédentes, qui comprend de plus l'agitation de la liqueur après l'addition de floculant et de support particulaire inerte pour favoriser la formation d'un sédiment consistant en floculant, support particulaire inerte et solides en suspension.

11. Procédé suivant la revendication 10, qui comprend de plus le transfert de la liqueur et des flocs dans une cuve de décantation pour permettre aux flocs de se séparer de la liqueur.

12. Procédé suivant la revendication 11, qui comprend de plus la séparation de la liqueur et du sédiment consistant en floculant, support particulaire inerte et solides en suspension et l'agitation du précipité pour briser les flocs et séparer ainsi le support particulaire inerte et les solides en suspension.

13. Procédé suivant l'une quelconque des revendications précédentes, dans lequel le support particulaire inerte est ajouté à la liqueur avant ou en même temps que le floculant.
